# EUROPÄISCHE PATENTSCHRIFT

(11) **EP 2 250 684 B1**
(45) Veröffentlichungstag und Bekanntmachung des Hinweises auf die Patenterteilung: **22.07.2015**
(21) Anmeldenummer: 09719070.6
(22) Anmeldetag: 10.03.2009
(51) Int. Cl.: F28F 9/02, H01M 10/613, H01M 10/643, H01M 10/6557, H01M 10/6565, H01M 10/6567, H01M 10/6568, H01M 2/02, H01M 2/10

(54) **MODULARES BATTERIESYSTEM MIT KÜHLSYSTEM**
MODULAR BATTERY SYSTEM WITH COOLING SYSTEM
SYSTÈME DE BATTERIE MODULAIRE AVEC SYSTÈME DE REFROIDISSEMENT

(30) Priorität: 14.03.2008 DE 102008014155
(43) Veröffentlichungstag der Anmeldung: 17.11.2010
(73) Patentinhaber: Samsung SDI Battery Systems GmbH, 8141 Zettling (AT)
(72) Erfinder: MAIER, Günter, A-8041 Graz (AT); MICHELITSCH, Martin, A-8041 Graz (AT)
(74) Vertreter: Zangger, Bernd
(86) Internationale Anmeldenummer: PCT/EP2009/052807
(87) Internationale Veröffentlichungsnummer: WO 2009/112501

(56) Entgegenhaltungen:
- EP-A- 0 177 225
- WO-A-2007/001345
- DE-A1- 19 503 085
- US-A1- 2002 102 454

## Beschreibung

Die Erfindung betrifft ein modulares Batteriesystem mit zumindest zwei Batteriemodulen.

Eine Ausgestaltung einer solchen Batterieeinheit mit einer Temperiereinheit ist aus der EP0065248A1 bekannt, wobei elektrochemische Speicherzellen in einer Hochtemperaturbatterie angeordnet sind.

Aus DE19503085C2 ist eine alternative Ausgestaltung einer Batterie mit mehreren Speicherzellen und einer Temperiereinheit bekannt. Auch WO 2007/001345, US 2002/0102454 und EP 0177225 und DE 19503085 offenbaren Batteriemodule.

Es ist eine Aufgabe der Erfindung ein besonders effizientes und kostengünstiges Batteriesystem zu entwickeln, dass sich durch seine Modularität auszeichnet, und das mit wenig Aufwand und kostengünstig für unterschiedliche Anwendungen und in unterschiedlichen Größen bereit gestellt werden kann.

Diese Aufgabe wird durch ein modulares Batteriesystem entsprechend Anspruch 1, sowie durch ein Verfahren zur Kühlmittelversorgung eines Batteriesystems nach Anspruch 18 gelöst.

Nach einer bevorzugten Ausführungsform der Erfindung ist ein modulares Batteriesystem mit zumindest zwei Batteriemodulen vorgesehen, wobei jedes Batteriemodul einen zumindest teilweise von einem Kühlmittel durchströmten Kühlkörper und eine Batteriezelle aufweist. Dabei ist die Batteriezelle derart an dem Kühlkörper angeordnet, dass sich ein wärmeleitender Kontakt zwischen der Batteriezelle und dem Kühlkörper einstellt. Ferner ist nach dieser Ausführungsform eine Kühlmittelversorgung mit einem Kühlmittelleiter zur Verteilung des Kühlmittels an die Kühlkörper oder zum Ableiten des Kühlmittels von den Kühlkörpern vorgesehen, wobei der Kühlmittelleiter Kühlmittelleitermodule aufweist, die miteinander verbunden sind und zumindest teilweise den Kühlmittelleiter bilden, und wobei, zur Anpassung der Strömungslänge des Kühlmittels in der Kühlmittelversorgung, in dem Kühlmittelleiter eine Umlenkeinrichtung zur Umkehrung der Strömungsrichtung des Kühlmittels in dem Kühlmittelleiter vorgesehen ist und der Kühlmittelleiter zumindest in einem Längsabschnitt zwei Strömungskanäle aufweist, in welchen das Kühlmittel im Wesentlichen in entgegengesetzten Richtungen führbar ist.

Nach einer bevorzugten Ausführungsform sind die Strömungskanäle dabei gleich, also parallel ausgerichtet. Nach anderen möglichen Ausführungsformen sind die Strömungskanäle zueinander mit einem maximalen Richtungsversatz von 45°, 30°, 20°, 15°, 10°, 5° oder 2° vorgesehen, wobei durch eine entsprechende Auslegung und Anordnung der Kühlmittelleitermodule wiederum die Strömungslänge des Kühlmittels geeignet angeglichen bzw. angepasst werden kann.

Nach einer besonderen Ausführungsform sind die beiden Strömungskanäle in dem Kühlmittelleiter benachbart positioniert, so dass also von zwei benachbarten Strömungskanälen gesprochen werden kann.

Nach einer besonderen Ausführungsform weist das erfindungsgemäße Batteriesystem als Kühlmittelleiter einen Kühlmittelverteiler und einen Kühlmittelsammler auf. Nach einer besonderen Ausführungsform der Erfindung weisen sowohl der Kühlmittelverteiler als auch der Kühlmittelsammler zumindest teilweise zwei Strömungskanäle auf.

Nach einer Ausführungsform der Erfindung ist mit der dargestellten Erfindung eine kosten- und bauraumoptimierte Realisierung eines mit Flüssigkeit gekühlten Hochvolt-Energiespeichers gegeben. Zu diesem Zweck wird das Gesamtsystem aus beliebig vielen Modulen, welche als Gleichteilkonzept kostengünstig herzustellen sind, aufgebaut. Der zur Kühlung der Batteriezellenmodule jeweils notwendige Kühlmittelstrom soll für eine optimierte Leistungsabgabe des Gesamtspeichers möglichst für alle Module konstant gehalten sein. Um dies für alle Module zu erreichen, muss die Leitungslänge bzw. der damit einhergehende Druckverlust für Zu- und Abfluss eines jeden Moduls in Summe gleich sein. Aus Montage- und Integrationssicht stellt der unmittelbar nebeneinander liegende Anschluss des Kühlmittelvorlaufes und Kühlmittelrücklaufs ein Optimum dar. Allerdings liegt bei einer Aneinanderreihung von Modulen das Problem vor, dass bei nebeneinander liegenden Hauptkühlmittelanschlüssen des Speichers die Leitungslängen der näher am Hauptanschluss liegenden Module im Vergleich zu den hinteren Modulen kürzer sind. Daraus ergibt sich naturgemäß ein größerer Volumenstrom in den vorderen Modulen, wodurch diese besser gekühlt werden. Um dies zu verhindern, könnte der Rücklauf auf der dem Anschluss gegenüberliegenden Seite herausgeführt, und danach über einen eigenen Kanal wieder auf die andere Seite des Speichers zum gemeinsamen Hauptanschluss geführt werden. Das benötigt jedoch einerseits zusätzlichen Bauraum und andererseits weitere Bauteile, wodurch die Kosten für ein solches Batteriesystem erheblich steigen würden. Erfindungsgemäß wird deshalb nach einer Ausführungsform der Erfindung ein Kühlmittelleiter mit mehreren, insbesondere zwei, integrierten Strömungskanälen vorgeschlagen. Das Kühlmittel wird zuerst in einem ersten, insbesondere inneren bzw. innen liegenden Strömungskanal in dem Kühlmittelleiter zumindest teilweise auf die der Speisung gegenüberliegende Seite geleitet und nach einer Umlenkung in die Gegenrichtung auf die Kühlkörper der Batteriemodule aufgeteilt. Daraus ergibt sich für alle Module zumindest annähernd eine gleiche Leitungslänge. Gleichzeitig besteht durch die steckbaren Kühlmittelleitungsmodule, insbesondere die nach einer bevorzugten Ausführungsform verwendeten geeigneten Rohrstücke, die Möglichkeit nahezu beliebig viele Module hintereinander zu stecken bzw. zu kombinieren, ohne dass damit ein hoher konstruktiver Aufwand oder zusätzliche Bauteile notwendig wären.

Nach einer Ausführungsform der Erfindung können verschiedenste Kühlmedien als Kühlmittel eingesetzt werden. Denkbar sind gasförmige und/oder flüssige Kühlmedien. Nach einer besonderen Ausführungsform handelt es sich bei dem Kühlmittel um eine Kühlflüssigkeit, wobei dieses nach einer besonderen Ausführungsform zumindest einen Anteil Wasser und gegebenenfalls chemische Zusätze enthält.

Nach einer Ausführungsform der Erfindung weisen die Strömungskanäle in Längsrichtung zumindest teilweise veränderliche Strömungsquerschnitte auf. Auf diese Weise kann in bekannter Weise der Strömungswiderstand geeignet eingestellt werden. Hierdurch kann eine noch gleichmäßigere Durchströmung des Kühlkörpers gewährleistet werden.

Nach einer besonderen Ausführungsform der Erfindung grenzen die beiden Strömungskanäle des Kühlmittelleiters, insbesondere direkt, aneinander. Nach einer besonderen Ausführungsform weisen die beiden Strömungskanäle zumindest eine gemeinsame Dichtfläche auf, bzw. teilen sich Ihre Dichtflächen zumindest teilweise.

Nach einer Ausführungsform der Erfindung wird der Längsabschnitt des Kühlmittelleiters zumindest teilweise durch eines der Kühlmittelleitermodule des Kühlmittelleiters gebildet.

Nach einer Ausführungsform der Erfindung wird der Längsabschnitt des Kühlmittelleiters zumindest durch zwei Kühlmittelleitermodule des Kühlmittelleiters gebildet.

Nach einer besonderen Ausführungsform der Erfindung ist jeweils ein Kühlmittelleitermodul einem, zwei oder drei Batteriemodulen zugeordnet.

Nach einer Ausführungsform der Erfindung sind die Kühlmittelleitermodule zumindest teilweise als Hohlstücke ausgebildet.

Nach einer Ausführungsform der Erfindung ist der Kühlmittelleiter zumindest teilweise als länglicher Hohlkörper ausgebildet, und ist die Umlenkeinrichtung so eingerichtet, dass sie den Kühlmittelstrom im Wesentlichen um 180° umlenkt.

Nach einer Ausführungsform der Erfindung weist der Kühlmittelleiter in dem Längsabschnitt quer zur Längsrichtung zumindest zwei im Wesentlichen getrennte Hohlräume auf, welche die zwei Strömungskanäle bilden. Definitionsgemäß werden unter im Wesentlichen getrennten Hohlräumen solche Hohlräume verstanden, die durch eine entsprechende Kontur eines Profils vollständig getrennt sind oder bei welchen, falls Öffnungen zwischen den Hohlräumen vorhanden sind, im Betrieb nur ein sehr geringer Anteil des beförderten Kühlmittels, insbesondere weniger als 10%, bevorzugt weniger als 5% oder 2%, der durch die Strömungskanäle geförderten Menge an Kühlmittel, durch diese Öffnungen durchtreten kann.

Nach einer Ausführungsform der Erfindung weist der Kühlmittelleiter in dem Längsabschnitt zumindest eine seitliche Öffnung zu einem der zwei Hohlräume auf.

Nach einer Ausführungsform der Erfindung weist zumindest einer der Kühlkörper einen Kühlkanal zur Durchströmung mit Kühlmittel auf, und ist die seitliche Öffnung des Kühlmittelleiters wirkend mit dem Kühlkanal verbunden. Nach anderen möglichen Ausführungsformen weist der Kühlkörper mehrere Kühlkanäle die jeweils in Serie oder parallel geschalten mit der Kühlmittelversorgung durch den Kühlmittelverteiler, insbesondere mit einer der Öffnungen in dem Kühlmittelverteiler, verbunden sind.

Nach einer Ausführungsform der Erfindung weist der Kühlmittelleiter in dem Längsabschnitt in einem Querschnitt ein erstes Profil sowie ein zumindest teilweise innerhalb des ersten Profils angeordnetes zweites Profil auf, wobei ein erster der zwei Strömungskanäle durch einen ersten Strömungsquerschnitt im Inneren des zweiten Profils und ein zweiter der zwei Strömungskanäle durch einen zweiten Strömungsquerschnitt zwischen dem ersten und dem zweiten Profil gebildet werden.

Nach einer Ausführungsform der Erfindung bildet das zweite Profil zumindest teilweise die äußere Kontur des Kühlmittelleiters.

Nach einer Ausführungsform der Erfindung weist das erste und das zweite Profil einen im Wesentlichen rohrförmigen Querschnitt auf.

Nach einer Ausführungsform der Erfindung ist die Umlenkeinrichtung als Endstück des Kühlmittelleiters vorgesehen, wobei das Endstück an dem Längsabschnitt des Kühlmittelleiters anschließt und diesen dicht verschließt.

Nach einer Ausführungsform der Erfindung weist der Kühlmittelleiter in dem Längsabschnitt ein äußeres im Wesentlichen zylindrisches Profil mit einem ersten Durchmesser auf. Dabei wird der erste Strömungskanal durch einen innerhalb des ersten Durchmessers angeordneten im Wesentlichen zylindrischen inneren Durchmesser gebildet. Nach einer besonderen Ausführungsform wird der innere Durchmesser durch ein weiteres Profil gebildet. Nach einer Ausführungsform umgibt der zweite Strömungskanal den ersten Strömungskanal zumindest teilweise.

Nach einer Ausführungsform der Erfindung ist die Umlenkeinrichtung als Endstück des Kühlmittelleiters vorgesehen, wobei das Endstück an das äußere Profil des Kühlmittelleiters anschließt und den Kühlmittelleiter verschließt.

Nach einer Ausführungsform der Erfindung ist der Kühlmittelleiter in dem Längsabschnitt einstückig ausgebildet.

Nach einer Ausführungsform der Erfindung ist der Kühlmittelleiter als Kühlmittelverteiler zur Verteilung des Kühlmittels von einer Kühlmittelversorgungseinrichtung, insbesondere einem Kühlmittelreservoir oder einer Kühlmittelpumpe, zu dem Kühlkörper eingerichtet.

Nach einer Ausführungsform der Erfindung ist der Kühlmittelleiter als Kühlmittelsammler zum Ableiten des Kühlmittels von dem Kühlkörper zu einer Kühlmittelversorgungseinrichtung, insbesondere einem Kühlmittelreservoir oder einer Kühlmittelpumpe, eingerichtet.

Nach einer Ausführungsform der Erfindung weisen die zumindest zwei Batteriemodule ein erstes und ein zweites hintereinander angeordnetes Batteriemodul auf, wobei der Kühlmittelleiter als erster Kühlmittelleiter ausgeführt ist und ferner ein zweiter Kühlmittelleiter vorgesehen ist, und der erste Kühlmittelleiter auf einer ersten Seite des ersten und zweiten Batteriemoduls angeordnet und der zweite Kühlmittelleiter auf einer zweiten, insbesondere der ersten Seite gegenüberliegenden, Seite des ersten und zweiten Batteriemoduls angeordnet ist.

Nach einer Ausführungsform der Erfindung ist auf der dem ersten und zweiten Batteriemodul abgewandten Seite des ersten Kühlmittelleiters zumindest ein weiteres Batteriemodul angeordnet.

Nach einer weiteren Ausführungsform ist die Erfindung durch ein Batteriesystem nach Anspruch 15 gekennzeichnet.

Nach einer Ausführungsform der Erfindung sind die Kühlmittelverteilermodule zumindest teilweise als Hohlstücke ausgebildet. Nach einer Ausführungsform der Erfindung weist der Kühlmittelverteiler in dem Längsabschnitt quer zur Längsrichtung des Kühlmittelverteilers zumindest zwei im Wesentlichen voneinander getrennte Hohlräume und der Kühlmittelverteiler zumindest eine seitliche Öffnung zu einem der zumindest zwei Hohlräume auf, und ist die seitliche Öffnung des Kühlmittelleiters mit einem der Kühlkanäle eines der Kühlkörper verbunden.

Nach einer Ausführungsform der Erfindung ist der Kühlmittelverteiler zumindest teilweise als länglicher Hohlkörper ausgebildet. Nach einer Ausführungsform ist die Umlenkeinrichtung so eingerichtet, dass sie den Kühlmittelstrom im Wesentlichen um 180° umlenkt.

Nach einer Ausführungsform der Erfindung weist der Kühlmittelverteiler in dem Längsabschnitt in einem Querschnitt ein erstes Profil sowie ein zumindest teilweise innerhalb des ersten Profils angeordnetes zweites Profil auf, wobei ein erster der zumindest zwei Strömungskanäle im Inneren des zweiten Profils und ein zweiter der zumindest zwei Strömungskanäle im Raum zwischen dem ersten und dem zweiten Profil gebildet werden, wobei das erste und das zweite Profil einen im Wesentlichen rohrförmigen Querschnitt aufweisen und der zweite Strömungskanal den ersten Strömungskanal zumindest teilweise umgibt.

Nach einer weiteren Ausführungsform ist die Erfindung durch ein Verfahren nach Anspruch 18 gekennzeichnet.

Im Folgenden wird die Erfindung anhand von beispielhaften, nicht-einschränkenden und schematischen Abbildungen beschrieben und erläutert. Es stellen dar:
Fig. 1: eine erfindungsgemäßes Batteriemodul in axonometrischer Ansicht
Fig. 2: wie Fig. 1, aber ohne Deckel
Fig. 3: eine Stirnansicht gemäß A in Fig. 2
Fig. 4: eine Stirnansicht gemäß B in Fig. 2
Fig. 5: einen Längsschnitt gemäß V-V in Fig 3 und Fig.4.
Fig. 6: eine weitere mögliche Ausführungsform einer erfindungsgemäßen Batterieeinheit
Fig. 7: der Kühlkörper aus Fig. 6 in einem Längsschnitt
Fig. 8: ein Batteriesystem zusammengesetzt aus mehreren Batterieeinheiten nach Fig. 6
Fig. 9: verschiedene mögliche Ausführungsformen von Batterieeinheiten
Fig. 10: eine alternative Ausführung eines Kühlkörpers
Fig. 11: eine erfindungsgemäßes Batteriesystem in einer Draufsicht
Fig. 12: eine Teil des erfindungsgemäßen Batteriesystems in einer isometrischen Ansicht, wobei ein Kühlmittelverteiler in einem Längssschnitt dargestellt ist Fig. 13: eine Ansicht des Kühlmittelverteilers in einem ersten Querschnitt
Fig. 14: eine Ansicht des Kühlmittelverteiler in einem zweiten Querschnitt
Fig. 15: die Ansicht nach Fig. 13
Fig. 16: eine vereinfachte Ansicht eines Längsschnittes durch ein Kühlmittelverteilungsmodul und dem Endstück
Fig. 17: eine vereinfachte Ansicht eines Längsschnittes durch ein Kühlmittelverteilungsmodul und die Speisung
Fig. 18: ein Teil des erfindungsgemäßen Batteriesystems aus Fig. 11 teilweise in einer Einzelteildarstellung
Fig. 19: eine vereinfachte Ansicht eines Längsschnittes durch ein Kühlmittelsammlermodul

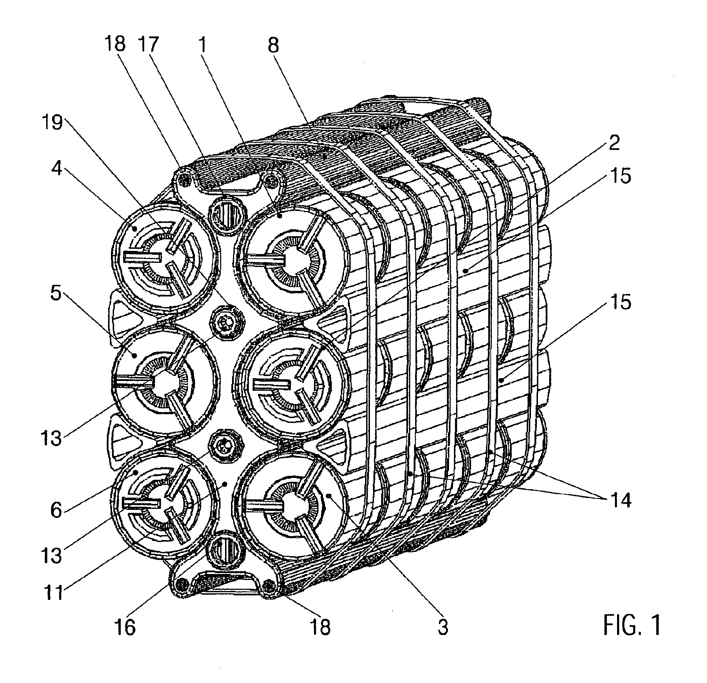

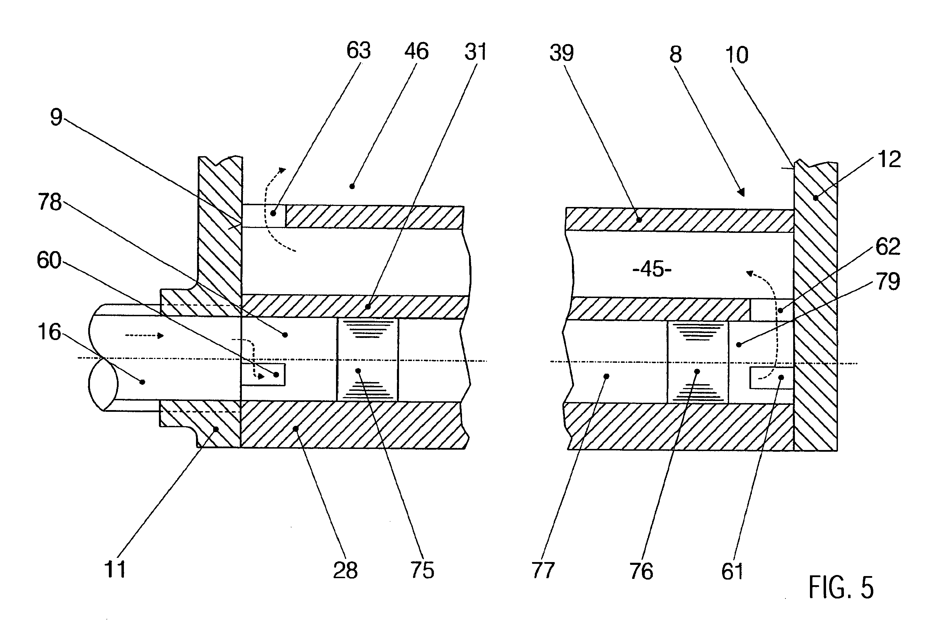

In Fig. 1 sind die in zwei parallelen Reihen angeordneten Batteriezellen mit den Bezugszeichen 1 bis 6 versehen, die Batteriezellen 1 bis 3 bilden eine erste Reihe und die Zellen 4 bis 6 eine zweite. Die Zellen können Hochleistungszellen beliebiger Bauart und chemischer Funktionsweise sein. Sie sind beispielsweise zylindrisch und reichen entweder über die ganze Länge der Batterie oder sind wie im gezeigten Ausführungsbeispiel aus mehreren, insbesondere drei, hintereinander angeordneten Einzelzellen zusammengesetzt. Neben zylindrischen Zellen sind jedoch auch Batteriezellen mit einem quadratischen oder prismatischen Querschnitt denkbar. Auf die elektrischen Verbindungen und Anschlüsse braucht nicht eingegangen zu werden, weil sie für die Erfindung unwesentlich sind. Zwischen zwei Reihen von Zellen erstreckt sich über die ganze Länge eine vom Kühlmittel in noch zu beschreibender Weise durchströmte Kühlkörper 8 bzw. Trägerplatte. Dieser ist ein Strangpressprofil vorzugsweise aus Leichtmetall, oder aus einem anderen geeigneten Werkstoff. Die Herstellung des Kühlkörpers durch Strangpressen erlaubt die Herstellung eines beiderseits offenen Hohlkörpers mit komplexem Querschnitt mit geringem Herstellungsaufwand. Ein so hergestelltes und in Stücke mit der Länge der Batterieinheit zerschnittenes Profil ist an seinen beiden so gebildeten Stimflächen 9, 10 mit einem Deckel bzw. einer Deckkappe 11 beziehungsweise 12 (siehe Fig.5) verschlossen. Die Deckkappen 11, 12 können auch so ausgebildet sein, dass sie die Zellen 1 bis 6, insbesondere in ihrer Längsrichtung, halten und/oder fixieren.

Die beiden Deckkappen 11, 12 werden von ersten Zugelementen 13 (zum Beispiel langen Gewindebolzen) zusammengehalten. Dazu sind die Deckel 11, 12 mit Bohrungen 18 am Rand, und Bohrungen 19 in der mittleren Region der Trägerplatte 8 versehen. Alle Zellen 1 bis 6 der Batterie werden von zweiten bzw. äußeren Zugelementen 14, hier Spannbändern, an den Kühlkörper 8 angedrückt und zusammengehalten. Zwischen den zweiten bzw. äußeren Zugelementen 14 und der der Trägerplatte 8 abgewandten Kontur der Zellen bis 6 ist jeweils ein annähernd dreikantiges hohles Längsprofil 15 angebracht. Näherungsweise, weil zwei Seiten konkave Zylinderflächen bilden, die sich an je zwei Zellen anlegen. In der vorderen Deckkappe 11 sind weiters Bohrungen 16, 17 für den Anschluss an den Kühlkreislauf vorgesehen, die untere (16) für den Zufluss und die obere (17) für den Abfluss.

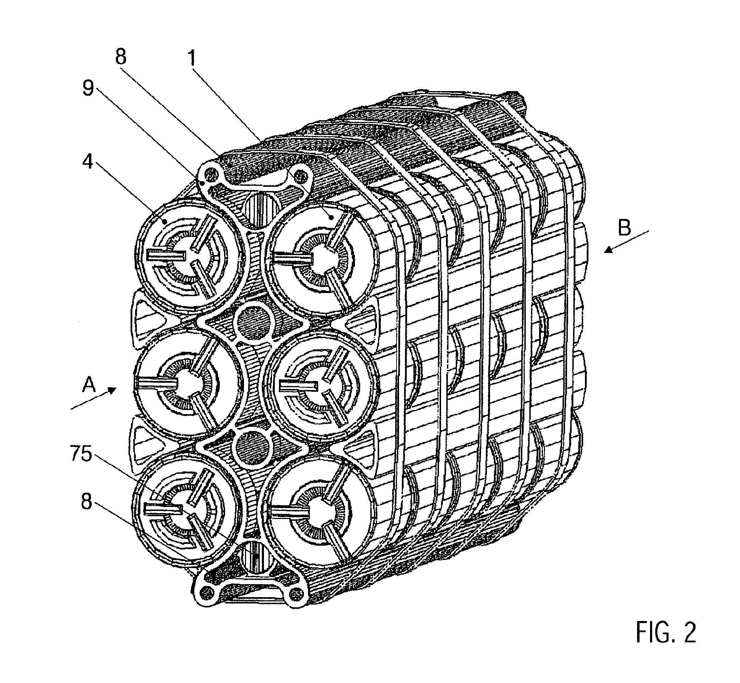

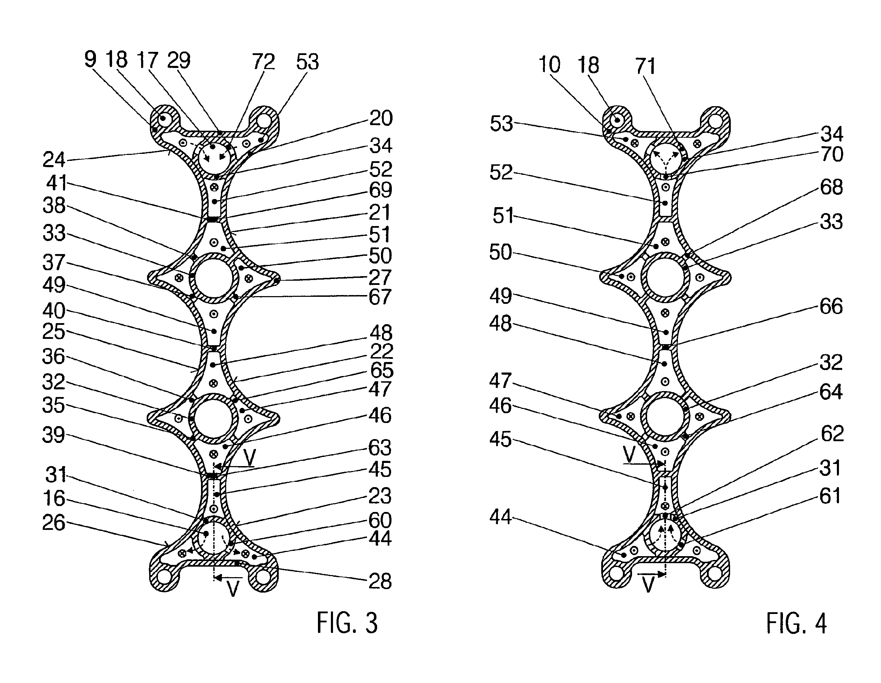

Fig. 2 zeigt dieselbe Batterie mit abgenommenen vorderer Deckkappe 11, sodass sich die Stirnfläche 9 des Strangpressprofils und damit sein Querschnitt dem Betrachter darbietet. Es ist vergrößert und ohne die Zellen in Fig. 3 zu sehen.

In Fig. 3 ist die vordere Stirnfläche 9 und Fig. 4 die hintere Stirnfläche 10 des Strangpressprofils alleine dargestellt. Die insgesamt mit 20 bezeichnete Außenwand des Strangpressprofils bildet kreisbogenförmige Ausnehmungen 21 bis 26 für die Zellen 1 bis 6, die so paarweise Rücken an Rücken und nebeneinander angeordnet sind. Weiters bildet die Außenwand 20 eine untere (28) und eine obere (29) Querwand. Am Übergang von den Ausnehmungen zu den Querwänden 28, 29 sind Bohrungen 18 für weitere erste Zugelemente angebracht.

Innerhalb dieser Aussenwand 20 ist durch verschiedene Wände eine Anzahl von in Längsrichtung verlaufenden Kühlkanälen (44-53) ausgebildet. So ist zwischen der unteren Querwand 28 und den die Ausnehmungen 23, 26 bildenden Teilen ein erster rohrförmiger Profilteil 31, welcher die drei äußeren Wandteile berührt, gewissermaßen einen eingeschriebenen Kreis bildet. Ein ebensolcher erster rohrförmiger Profilteil ist zwischen der oberen Querwand 29 und den die Ausnehmungen 21, 24 bildenden Teile der Außenwand 20 angeordnet.

Zwischen den hier die Ausnehmungen 21, 22, 25 und 24 bildenden Wandteilen ist an der breitesten Stelle an der Höhe der Grate 27, ein zweiter rohrförmiger Profilteil 33 ausgebildet. Von ihm gehen sternförmig Zwischenwände 37, 38 zu den die Ausnehmungen bildenden äußeren Wandteilen aus. In gleicher Weise ist zwischen den Ausnehmungen 22, 23, 25, 26 ein zweiter rohrförmiger Profilteil 32 mit den Zwischenwänden 35, 36 ausgebildet. Ungefähr an den schmalsten Stellen des Strangpressprofils sind Trennwände 39, 40, 41.

Diese Zwischenwände 35-38 und Trennwände 39-41 bilden voneinander getrennte Strömungskanäle, in denen nach einer beispielhaften Ausführungsform die Strömungsrichtung zwischen benachbarten Strömungskanälen abwechselt. Die Strömungsrichtungen sind in Fig.3 in der üblichen Weise angedeutet: Ein Kreis mit Punkt steht für einen auf das Auge des Betrachters gerichteten Pfeil, ein Kreis mit Kreuz einen sich vom Betrachter entfernenden Pfeil. In Fig.4, die die hintere Stirnfläche 10 zeigt, sind die Symbole für die Flussrichtung für ein und denselben Kanal denen der Fig.3 entgegengesetzt.

Auf diese Weise sind folgende Kanäle gebildet: Zwei zur hinteren Stirnfläche 10 hin durchströmte symmetrische erste Kanäle 44; ein zur vorderen Stirnfläche 9 durchströmter zweiter Kanal 45; ein zur hinteren Stirnfläche 10 durchströmter dritter Kanal 46; zwei zur vorderen Stirnfläche 9 durchströmte symmetrische vierte Kanäle 47; ein zur hinteren Stirnfläche 10 durchströmter fünfter Kanal 48; ein zur vorderen Stirnfläche 9 durchströmter sechster Kanal 49; zwei zur hinteren Stirnfläche 10 durchströmte symmetrische siebente Kanäle 50; ein zur vorderen Stirnfläche 9 durchströmter achter Kanal 51; ein zur hinteren Stirnfläche 10 durchströmter neunter Kanal 52; und zwei zur vorderen Stirnfläche 9 durchströmt symmetrische zehnte Kanäle 53.

Zur Umleitung der Strömung an den Stirnflächen könnten entsprechende Umleitungskanäle an der Innenseite der Deckkappen 11,12 eingefräst sein. Erfindungsgemäß aber werden sie durch von den Stirnflächen 9, 10 ausgehende Ausklinkungen der Zwischenwände und Trennwände des Strangpressprofils 8 hergestellt. Da alle diese Ausklinkungen von einer der beiden Stirnflächen 9, 10 ausgehen, sind sie mit geringem Fertigungsaufwand anzubringen, etwa durch Fräsen.

In Fig. 3 sind die von der vorderen Stirnfläche 9 ausgehenden Ausklinkungen mit den folgenden Bezugszeichen versehen: 60 im rohrförmigen Profilteil 31 zur Verbindung des Zuflusses 16 mit den ersten Kanälen 44; 63 in der Trennwand 39 zur Verbindung des zweiten Kanals 45 mit dem dritten Kanal 46; 65 in den Zwischenwänden 35 zur Verbindung der beiden vierten Kanäle 47 mit dem fünften Kanal 48; 67 in den Zwischenwänden 37 zur Verbindung des sechsten Kanals 49 mit den beiden siebenten Kanälen 50; 69 in der Trennwand 41 zur Verbindung des achten Kanals 51 mit dem neunten Kanal 52; 72 zur Verbindung der beiden zehnten Kanäle 53 mit dem Abfluss 17. Anstelle der Ausklinkungen 60,62, 70,71 können die rohrförmigen Wandteile 31,34 in Längsrichtung zurückgenommen sein.

Fig. 4 zeigt die Ausklinkungen in der hinteren Stirnfläche 10: 61 und 62 zur Verbindung der beiden ersten Kanäle 44 mit dem zweiten Kanal 45; 64 in den Zwischenwänden 35 zur Verbindung des dritten Kanals mit den beiden vierten Kanälen 47; 66 in der Trennwand 40 zur Verbindung des fünften Kanals 48 mit dem sechsten Kanal 49; 68 in den Zwischenwänden 38 zur Verbindung der siebten Kanäle 50 mit dem achten Kanal 51; 70 und 71 im rohrförmigen Profilteil 34 zur Verbindung des neunten Kanals 52 mit den beiden zehnten Kanälen 53.

Mit den Ausklinkungen in den ersten rohrförmigen Profilteilen 31, 34 ergibt sich eine Besonderheit, die anhand der Fig.5 zu erklären ist.

In Fig . 5 ist zu sehen, dass der erste rohrförmige Profilteil 31, der mit dem Zufluss 16 des Kühlmittels in Verbindung steht, in der Nähe des vorderen Deckels 11 und in der Nähe der hinteren Deckkappe 12 je einen Pfropfen 75, 76 enthält. Diese Pfropfen 45, 46 trennen einen Eintrittsraum 78 auf der einen Seite und einen Durchgangsraum 79 auf der anderen Seite von einem zwischen den beiden Pfropfen 75, 76 liegenden nichtdurchströmten abgeschlossenen Raum 77. So strömt die durch den Zufluss 16 eintretende Kühlflüssigkeit in den Eintrittsraum 78, von diesem durch die Ausklinkungen 60 (siehe Fig. 3) in die beiden ersten Kanäle 44, die sich in Fig.5 vor und hinter der Bildfläche, in Fig.3 beiderseits des ersten rohrförmigen Profilteiles befinden. Am anderen Ende der ersten Kanäle 44 tritt das Kühlmedium durch die Ausklinkungen 61 in den Durchgangsraum 79 und von diesem über die Ausklinkung 62 in den zweiten Kanal 45. An der vorderen Stirnfläche 9 strömt das Kühlmedium dann durch die Ausklinkung 63 in den dritten Kanal 46, und so weiter.

Analog, nur in entgegengesetzter Richtung ist die Strömung im ersten rohrförmigen Profilteil 34 zum Abfluss 17 geführt.

Soweit ein Ausführungsbeispiel. Von diesem abweichend können im Rahmen der Erfindung die Zellen auch in mehr als zwei Reihen und/oder gegeneinander versetzt angeordnet und die Trägerplatte entsprechend anders geformt sein. Auch dann kann bei geeigneter Anordnung der inneren Wände erreicht werden, dass die Strömungsrichtungen in benachbarten Kanälen einander entgegengesetzt ist. Dadurch wird bei einfachster und billigster Herstellung eine gleichmäßige Temperaturverteilung an der Oberfläche der Trägerplatte erreicht werden.

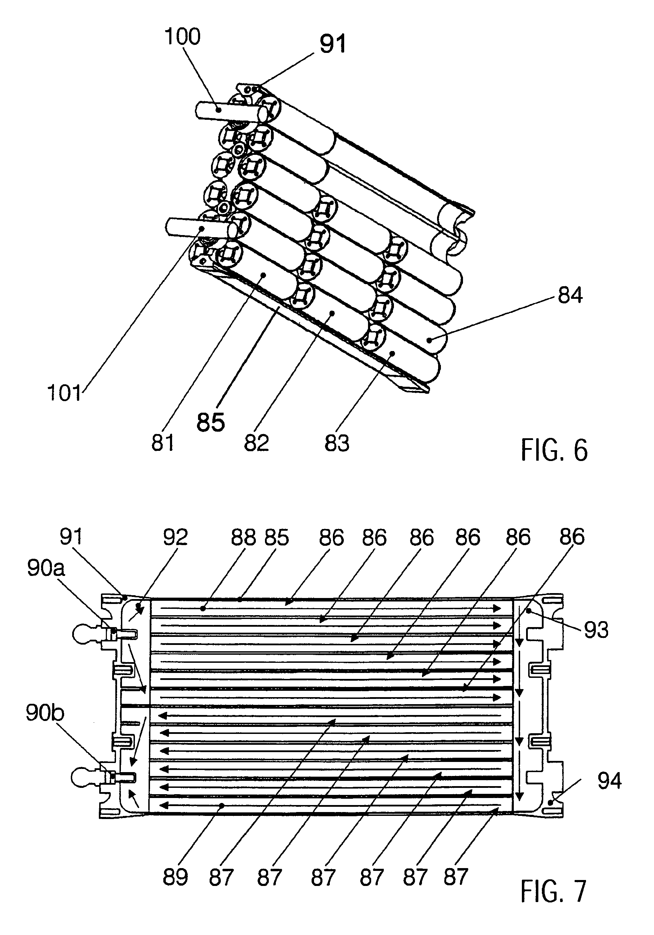

Fig. 6 zeigt eine weitere mögliche Ausführungsform einer erfindungsgemäßen modularen Batterieeinheit 80. Dabei sind mehrere Batteriezellen 81, 82, 83, 84 an einem Kühlkörper 85 angeordnet. Die Batteriezellen sind dabei an den Kühlkörper 85 angeklebt oder angepresst oder auf andere Weise mit diesem in Kontakt gebracht, so dass von den Batteriezellen im Betrieb entwickelte Wärme auf den Kühlkörper 85 übertragen werden kann. Wie aus Fig. 6 ersichtlich, können mehrere Batteriezellen 81, 82, 83 hintereinander entlang der Längsseite des Kühlkörpers 85 an diesem angeordnet werden. Das ist insbesondere in dem Fall vorteilhaft, in welchem der Kühlkörper beispielsweise aus einem Strangpressprofil geformt ist und seiner Länge dem verfügbaren Bauraum angepasst werden kann. Das Strangpressprofil kann damit in der nötigen Länge zugeschnitten werden. Nachdem Batteriezellen zumeist nur in Standardgrößen verfügbar sind, werden so mehrere kürzere Batteriezellen hintereinander angeordnet um die volle Länge des Kühlkörpers bzw. den verfügbaren Bauraum bestmöglich zu nutzen.

In Fig. 7 ist ein vertikaler Längsschnitt durch den Kühlkörper 85 entlang einer Mittenebene dargestellt. Darin sind die in dem Kühlkörper 85 ausgebildeten Kanäle 86, 87 ersichtlich. Weiter sind in der schematischen Darstellung in Fig. 7 durch entsprechende Pfeile 88, 89 in den Kanälen 86,87 die Flußrichtungen des Kühlmedium angezeigt. Es ist dabei ersichtlich, dass in einem ersten, oberen Bereich das über einen Zulauf 90a in die Deckkappe 91 zugeführte Kühlmedium sich in einem abgeteilten Verteilerraum 92 in der Deckkappe 91 verteilt, bevor es über die Kanäle 86,87 des Kühlkörpers 85 auf die gegenüberliegende Seite des Kühlkörpers 85 in einen abgegrenzten Verteilerraum 93 der zweiten Deckkappe 94 geleitet wird. Von diesem Verteilerraum 93 wird das Kühlmedium nachfolgend wiederum auf die gegenüberliegende Seite in einen Sammelraum bzw. Verteilerraum 94 der ersten Deckkappe 91 geleitet. Von diesem Sammelraum 94 wird das Kühlmedium über einen in bzw. an der Deckkappe 91 angeordneten Ablauf 90b aus der Batterieeinheit abgeleitet. Somit weist der Kühlkörper eine vertikale Zweiteilung auf, wodurch in einem ersten, oberen Bereich ein Kühlmedium von einer ersten zu einer zweiten Seite strömt und in einem zweiten, unteren Bereich Kühlmedium von der zweiten zur ersten Seite zurückströmt.

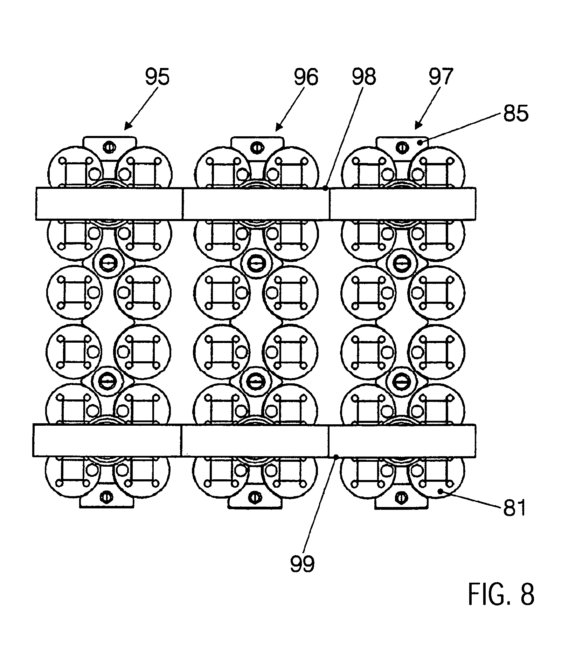

In Fig. 8 sind mehrere modulare Batterieeinheiten 95, 96, 97 zu einem Batteriesystem kombiniert. Zu diesem Zweck werden die Zu- und Abläufe 98 durch geeignete Verteilerleisten 98, 99, die vorzugsweise integrierte Dichtungen, beispielsweise O-Ringe, aufweisen, miteinander verbunden. Wie aus Fig. 8 ersichtlich ist dabei eine obere Verteilerleiste 98 zur Verbindung der Zuläufe sowie eine untere Verteilerleiste 99 zur Verbindung der Abläufe vrogesehen. In einer anderen Ausführungsform können die Positionen der Zu- und Abläufe natürlich vertauscht werden. Vorzugsweise weist bereits jede Batterieeinheit Teile der Verteilerleisten 98, 99 auf, und ist deshalb, wie in Fig. 6 schematisch dargestellt, an seiner Deckkappe 85 mit einem ersten und einem zweiten Verteilerleistenelement 100, 101 ausgestattet, wodurch die Verteilerleisten im Wesentlichen durch Zusammenstecken der Verteilerleistenelemente der Batterieeinheiten gebildet werden können.

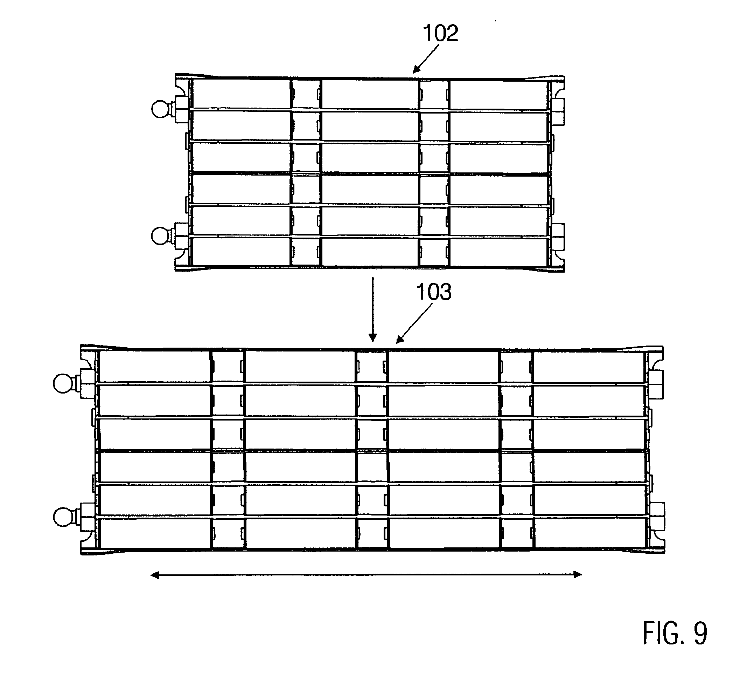

Ein besonderer Vorteil der erfindungsgemäßen Ausführung der modularen Batterieeinheit ist deren einfache Anpassung an den verfügbaren Bauraum. Nachdem der Kühlkörper im Allgemeinen aus einem Strangpressprofil hergestellt ist, kann dieser in nahezu beliebiger Länge zugeschnitten bzw. eingepasst werden. Je nach Bauraum können demnach beliebig lange Batterieeinheiten 102, 103 hergestellt werden, wie in Fig. 9 vereinfacht dargestellt ist. Je nach Länge des Kühlkörpers werden geeignete Batteriezellen verwendet bzw. mehrere Batteriezellen hintereinander angeordnet um möglichst die volle Länge des Kühlkörpers zu nutzen. Dazu ist in Fig. 9 im oberen Bereich eine erste Ausführung einer Batterieeinheit dargstellt, bei welcher 3 Reihen von Batteriezellen hintereinander am Kühlkörper angeordnet sind, während im unteren Bereich in einer zweiten Ausführung 4 Reihen von vertikal angeordneten Batteriezellen hintereinander am Kühlkörper angeordnet sind. Wie ersichtlich unterscheiden sich die beiden Ausführungsformen zwar in Ihrer Länge und in der Länge Ihrer Kühlkörper, jedoch ist der Kühlkörper im Profil ident, insbesondere aus einem einzigen Strangpressprofil hergestellt. Auch die verwendeten Batteriezellen unterscheiden sich in beiden Ausführungsformen nicht.

Nach einer weiteren bevorzugten Ausführungsform der Erfindung werden die Batterieeinheiten hintereinander angeordnet, und gegebenenfalls einerseits mit Ihren Zuläufen und andererseits mit Ihren Abläufen verbunden. Auf diese Weise können große Batteriesysteme mit entsprechend großer Leistung verwirklicht werden.

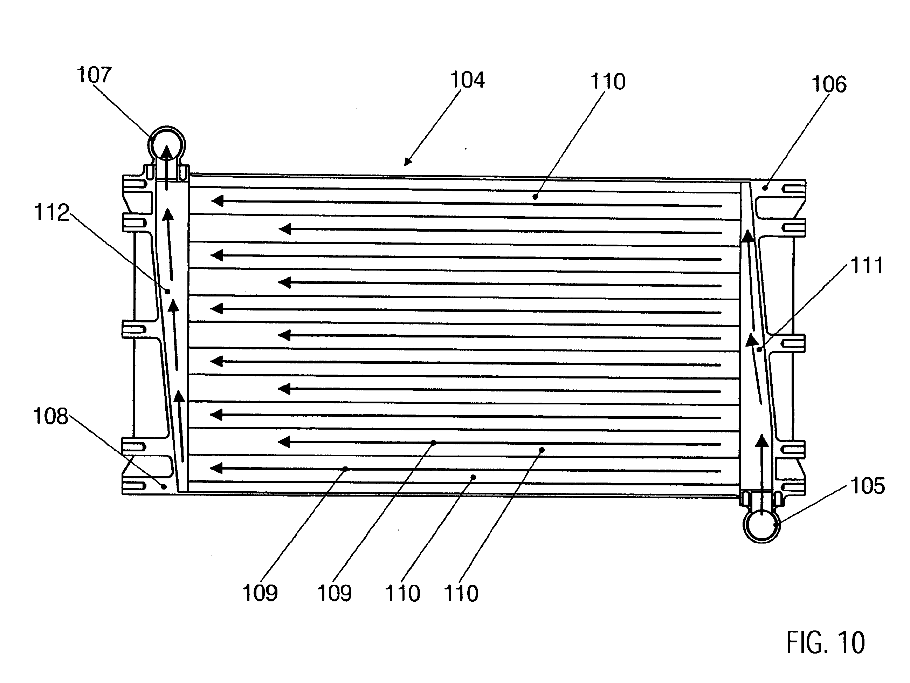

Eine weitere mögliche Ausgestaltung eines Kühlkörpers 104 ist in Fig. 10 schematisch darstellt. Ähnlich wie in Fig.7 ist hier ebenenfalls ein vertikaler Längsschnitt einer möglichen Ausführungsform eines Kühlkörpers dargestellt. Diese Ausführung unterscheidet sich von den anderen gezeigten Ausführungsbeispielen dadurch, dass der Zulauf 105 in bzw. an einer ersten Deckkappe 106 und der Ablauf 107 in bzw. an der gegenüberliegenden zweiten Deckkappe 108 angeordnet ist. Wie weiter aus Fig. 10 ersichtlich ist, wird das Kühlmedium, wie durch Pfeile 109 zur Kennzeichnung der Flußrichtung des Kühlmediums verdeutlicht, in im Wesentlichen parallelen Kanälen 110 in gleicher Richtung durch den Kühlkörper 104 geführt. In den Deckkappen 106, 108 befinden sich sogenannte Verteiler- bzw. Sammelräume 111, 112 um einerseits das Kühlmedium von dem Zulauf 105 zu den einzelnen Kanälen 110 zu verteilen bzw. auf der gegenüberliegenden Seite von den Kanälen 110 zum Ablauf 107 hin zu sammeln.

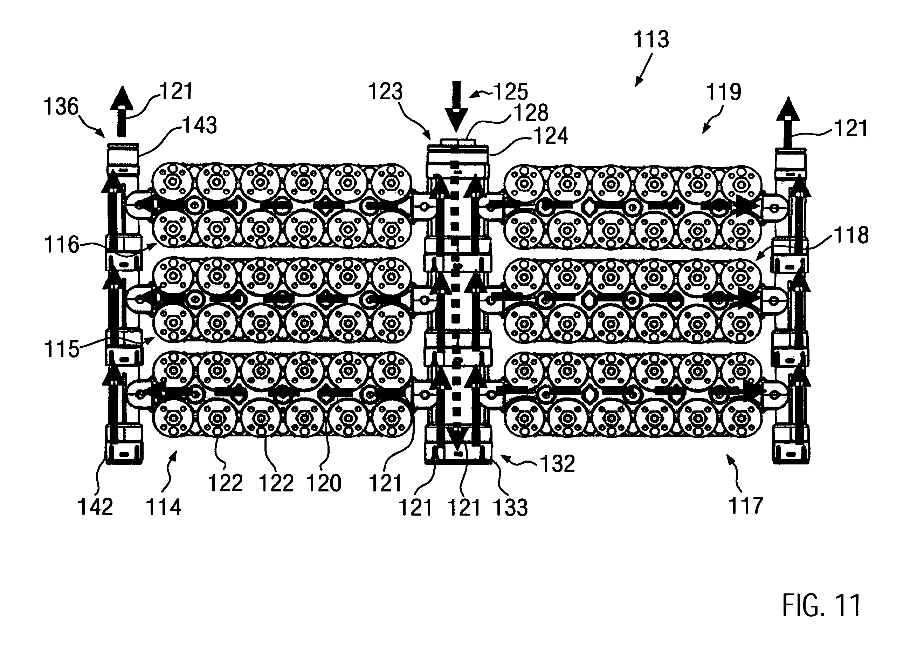

In Fig. 11 ist ein modulares Batteriesystem 113 mit sechs Batteriemodulen 114, 115, 116, 117, 118, 119 dargestellt. Wie anhand des Batteriemodules 114 exemplarisch dargestellt, weist das Batteriemodul 114 einen Kühlkörper 120, der von einem Kühlmittel 121 entlang eines Kühlkanales (nicht dargestellt) durchströmt wird. Hinsichtlich des Kühlkanales wird auf die beispielhaften Ausführungen zu den Fig. 3-10 verwiesen. An dem Kühlkörper 120 ist eine Anzahl von Batteriezellen 122 (sind der Übersichtlichkeit wegen nur teilweise in Fig. 11 referenziert) angeordnet, wobei in dem dargestellten Fall jeweils 6 Batteriezellen an jeder der beiden Seiten des Kühlkörpers 120 angeordnet sind. Wie aus Fig. 11 ersichtlich, sind die Batteriemodule 114, 115, 116, 117, 118, 119 in zwei Reihen hintereinander angeordnet. Die Batteriezellen 122 sind dabei, wie in Fig. 11 ersichtlich, entlang der Blickrichtung des Betrachters ausgerichtet. Wie weiter aus Fig. 11 ersichtlich, ist zwischen den beiden Reihen der Batteriemodule ein Kühlmittelverteiler 123 angeordnet. Dem Kühlmittelverteiler 123 wird über ein Speisungsmodul 124 das Kühlmittel 125 zugeführt. Über das Speisungsmodul 124 kann beispielsweise der Anschluss einer Kühlmittelversorgungseinrichtung, insbesondere einer Kühlmittelpumpe und/oder eines Kühlmittelreservoir (nicht dargestellt), erfolgen.

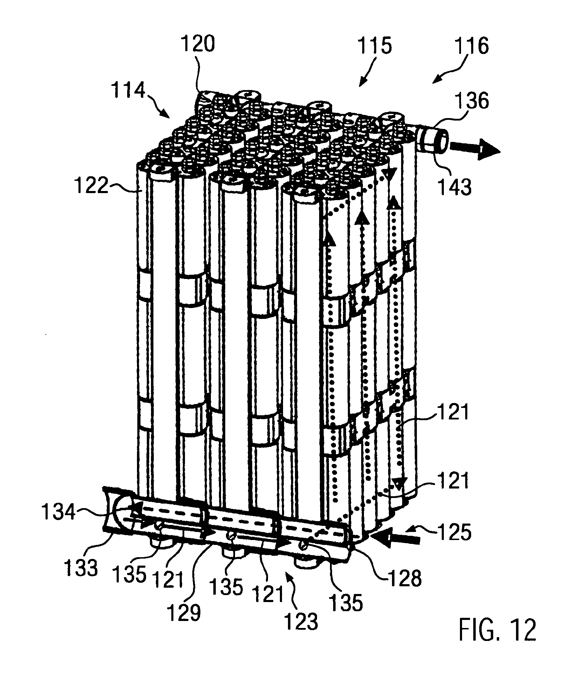

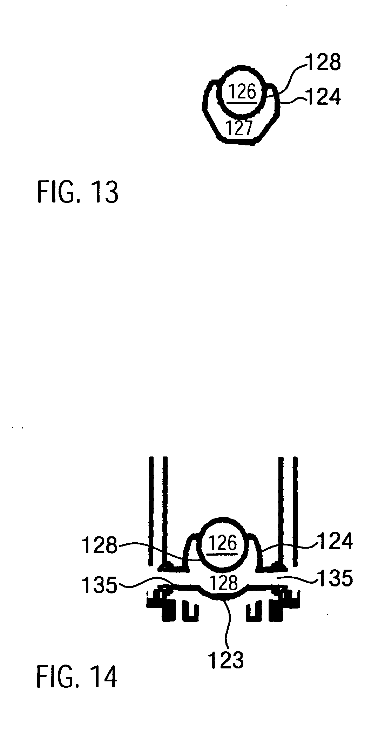

In Fig. 12 ist ein Längschnitt durch eine mögliche Ausführungsform eines erfindungsgemäßen Kühlmittelverteiler 123 dargestellt. In der Ansicht nach Fig. 12 in Verbindung mit den Fig. 13 und 14 ist im Querschnitt des Kühlmittelverteilers 123 ersichtlich, dass der Kühlmittelverteiler 123 zwei Strömungskanäle 126, 127 aufweist. Durch Richtungspfeile 121 ist in den Fig. 11 bis 19 eine bevorzugte Strömungsrichtung des Kühlmittels angezeigt. Ein erster Strömungskanal 126 wird durch eine erste rohrförmige Leitung 128 gebildet, die wiederum zumindest teilweise durch eine zweite rohrförmige Leitung 129 umgeben ist, in deren Inneren der zweite Strömungskanal 127 ausgebildet ist. Wie in den Fig. 13-15 ersichtlich, weist der Kühlmittelverteiler 123 einen äußeren im Wesentlichen zylindrischen Durchmesser 130 bzw. ein erstes rohrförmiges Profil zur Ausbildung des zweiten Strömungskanals 127 sowie einen inneren im Wesentlichen zylindrischen Durchmesser 131 bzw. ein zweites rohrförmiges Profil zur Ausbildung des ersten Strömungskanals 126 auf. Der zweite Strömungskanal 127 umgibt dabei den ersten Strömungskanal 126 zumindest teilweise.

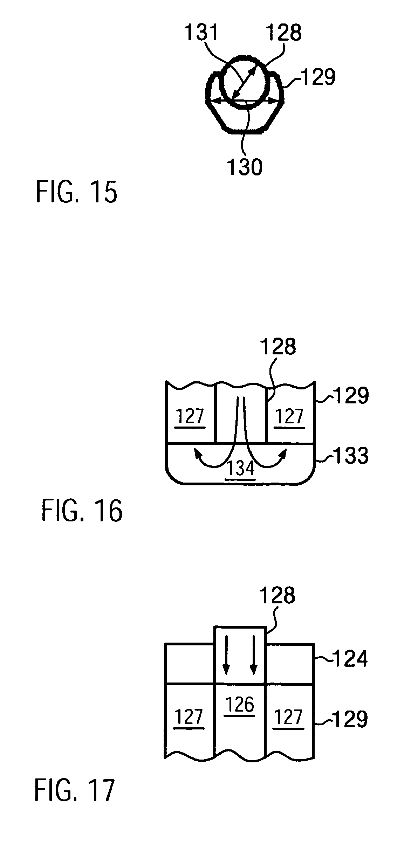

Wie in Fig. 13 gut ersichtlich, weist der Kühlmittelleiter, im vorliegenden Fall der Kühlmittelverteiler im Querschnitt zwei getrennte Hohlräume auf, die die entsprechenden Strömungskanäle bilden. In Fig. 14 ist dazu ersichtlich, dass der äußere Hohlraum bzw. zweite Strömungskanal im Bereich des Anschlusses eines oder mehrerer Kühlkörper zumindest eine, im dargestellten exemplarischen Fall zwei Öffnungen 135 aufweist, über die der Kühlmittelverteiler einen oder mehrere Kühlkörper mit dem Kühlmittel versorgen kann. Für die Versorgung des Kühlkörpers sind gegebenenfalls noch geeignete Anschlussstücke zwischen der Öffnung des Kühlmittelverteilers und dem Kühlkanal des Kühlkörpers vorgesehen. Im Bereich der Speisung 124 wird das Kühlmittel 121 vorerst in den ersten Strömungskanal 126 eingeleitet und darin bis zum vorderen Ende 132 des Kühlmittelverteilers 123 geleitet. Der Pfad des Kühlmittels 121 ist in Fig. 11 vereinfacht und beispielhaft durch einen strichlierten Pfeil 121 im Kühlmittelverteiler 123 verdeutlicht. Der Kühlmittelverteiler 123 weist ein Endstück 133 mit einer Umlenkeinrichtung 134 auf, wodurch die Strömungsrichtung des Kühlmittels im Wesentlichen um 180° geändert werden kann. Die Umlenkung ist in den Fig. 12 und Fig. 16 exemplarisch anhand zweier unterschiedlicher Ausführungsformen dargestellt.

Nach einer besonderen Ausführungsform weist die Umlenkeinrichtung 134 eine zumindest teilweise gerundete, insbesondere zumindest teilweise sphärische, Fläche auf, durch welche die Strömungsrichtung des Kühlmittels geeignet geändert werden kann. Durch eine entsprechende Rundung und die damit verbundene Führung kann bei der Umlenkung des Kühlmittels der Bildung eines hohen Staudrucks entgegen gewirkt werden. Durch die Umlenkeinrichtung 134 kann nicht nur die Strömungsrichtung das Kühlmittels umlenkt, sondern auch das Kühlmittel in den zweiten Strömungskanal 127 eingeleitet werden. In dem zweiten Strömungskanal 127 strömt das Kühlmittel 121 in der Folge in Richtung der Speisung zurück. Allerdings ist der zweite Strömungskanal zur Speisung hin verschlossen, so dass das Kühlmittel über geeignete seitliche Öffnungen 135 in dem zweiten Strömungskanal bzw. in der den zweiten Strömungskanal 127 bildenden zweiten rohrförmigen Leitung, in den Kühlkörper 120, insbesondere in den Kühlkanal des Kühlkörpers 120, einströmen kann um dort für Kühlung zu sorgen. Nach der Durchströmung des Kühlkörpers 120 wird das Kühlmittel über einen Kühlmittelsammler 136, der ebenfalls rohrförmig ausgeführt ist, wiederum von den Batteriemodulen ab- und beispielsweise einer Kühlmittelversorgungseinrichtung, insbesondere einem Kühlmittelreservoir und/oder einer Kühlmittelpumpe, zugeleitet.

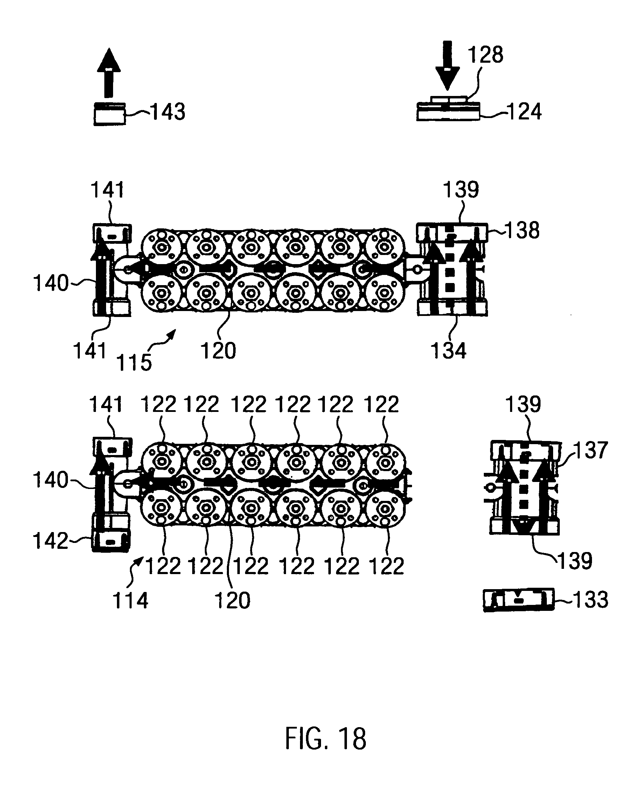

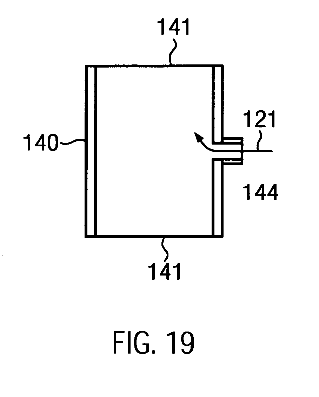

Der Kühlmittelsammler 136, wie in Fig. 19 ersichtlich, weist dazu ebenfalls eine oder mehrere seitliche Öffnungen 144 auf, über welche das Kühlmittel aus dem Kühlkörper 123, insbesondere aus dem Kühlkanal des Kühlkörpers 123, in den Kühlmittelsammler 136 einströmen kann.Wie aus Fig. 18 schematisch ersichtlich, zeichnet sich die dargestellte mögliche Ausführungsform eines Batteriesystems besonders durch ihre Modularität aus. Durch Aneinanderreihung der Batteriemodule 114, 115, 116, 117, 118, 119 können Batteriesystem beliebiger Komplexität erstellt werden. Die Modularität des Batteriesystems zeigt sich auch in der Modularität des Kühlsystems. Wie aus Fig. 18 ersichtlich, weisen die Kühlmittelleiter, also der Kühlmittelsammler und/oder der Kühlmittelverteiler jeweils Kühlmittelleitermodule auf, die durch Zusammensetzen den betriebsbereiten Kühlmittelleiter bilden. Dazu sind bei dem Kühlmittelverteiler 123 einzelne Kühlmittelverteilermodule 137, 138 vorgesehen, die wahlweise bereits einen Teil der Batteriemodule bilden und/oder mit dem Batteriemodul und/oder dem Kühlkörper verbunden sind, wie in Fig. 18 beispielhaft an dem Batteriemodul 115 und dem Kühlmittelverteilermodul 138 gezeigt wird. Nach einer anderen Ausführungsform sind die Kühlmittelverteilermodule als zusätzliche bzw. getrennt montierbare Teile an die Batteriemodule, insbesondere an die Kühlkörper der Batteriemodule, anzuschließen. Der zweite Fall ist in Fig. 18 beispielhaft am Batteriemodul 114 und dem Kühlmittelverteilermodul 137 gezeigt. Die Kühlmittelverteilermodule 137, 138 weisen jeweils an beiden Enden Anschlussflächen 139 auf, an denen gegebenenfalls ein weiteres Kühlmittelverteilermodul (mit dessen Anschlussfläche), ein Endstück 133, ein Speisungsmodul 124 oder ein anderes Anschlussteil angeordnet werden kann. Nach einer bevorzugten Ausführungsform weist der Kühlmittelsammler 136 die gleiche Modularität wie der Kühlmittelverteiler 123 auf. Die Kühlmittelsammlermodule 140 weisen deshalb ebenfalls geeignete Anschlussflächen 141 auf, an denen weitere Kühlmittelsammlermodule, Endstücke 142 oder Ableitungsmodule 143 zum Ableiten des Kühlmittels aus dem Kühlmittelsammler 136, insbesondere an eine Kühlmittelversorgungseinrichtung, vorzugsweise ein Kühlmittelreservoir und/oder eine Kühlmittelpumpe angeordnet werden können. Ein beispielhaftes Kühlmittelsammlermodul 140, wie in Fig. 19 in einem Längsschnitt gezeigt, weist nach einer besonderen Ausführungsform zumindest eine seitliche Öffnung 144 auf, durch welche Kühlmittel aus dem Batteriemodul 114, insbesondere dem Kühlkörper 120, in den Kühlmittelsammler 136 einströmt und von diesem abgeleitet werden kann.

In der in den Figuren 11 bis 19 dargestellten beispielhaften Ausführungsform ist der Kühlmittelverteiler 123 mit zwei Strömungskanälen ausgestaltet, die es ermöglichen, dass das Kühlmittel zumindest in einem Teilbereich bzw. Längsabschnitt des Kühlmittelleiters in entgegengesetzten oder annähernd entgegengesetzten Richtungen strömt. Nach einer anderen möglichen Ausführungsform ist es natürlich auch möglich den Kühlmittelverteiler, den Kühlmittelsammler oder beide Kühlmittelleiter zumindest teilweise entsprechend mit zwei oder mehr als zwei Strömungskanälen auszustatten. Nach einer Ausführungsform der Erfindung wird versucht, die Strömungslänge des Kühlmittels zwischen der Speisung 124 und dem Ableitungsmodul 143 durch die verschiedenen Batteriemodule, insbesondere durch die verschiedenen Kühlkörper, anzugleichen. Durch die dargestellte Lösung kann erreicht werden, dass der Strömungspfad des Kühlmittels 121 durch jeden der Kühlkörper der Batteriemodule zumindest annähernd die gleiche Länge aufweist. Das ist insbesondere bei einer Speisung und Ableitung an der selben Seite des Batteriesystems wichtig, da andernfalls die nahe an der Speisung und Ableitung positionierten Batteriemodule für das Kühlmittel einen wesentlich kürzeren Strömungspfad darstellen würden und deshalb bevorzugt gekühlt würden. Batteriemodule die entsprechend weiter entfernt von der Speisung und/oder Ableitung positioniert wären, würden somit wenig und möglicherweise unzureichend gekühlt.

Nach einer besonderen Ausführungsform der Erfindung wird ein Rohr-in-Rohr System mit zumindest zwei Reihen von Batteriemodulen vorgesehen, bei dem beliebig viele Module hintereinander gesteckt werden können. Das Kühlmittel wird zuerst in einem inneren Rohr auf die der Speisung gegenüberliegende Seite geleitet und nach einer Umlenkung in die Gegenrichtung auf die Batteriemodule aufgeteilt. Daraus ergibt sich für alle Batteriemodule bzw. Kühlkörper die gleiche Leitungslänge. Gleichzeitig können durch die steckbaren Kühlleiterrohrstücke beliebig viele Module hintereinander gesteckt werden, ohne dass zusätzliche Bauteile notwendig wären.

## Patentansprüche

1. Modulares Batteriesystem mit zumindest zwei Batteriemodulen, wobei jedes Batteriemodul einen zumindest teilweise von einem Kühlmittel durchströmten Kühlkörper und eine Batteriezelle aufweist, wobei die Batteriezelle derart an dem Kühlkörper angeordnet ist, dass sich ein wärmeleitender Kontakt zwischen der Batteriezelle und dem Kühlkörper einstellt, und eine Kühlmittelversorgung mit einem Kühlmittelleiter zur Verteilung des Kühlmittels an die Kühlkörper oder zum Ableiten des Kühlmittels von den Kühlkörpern vorgesehen ist, wobei der Kühlmittelleiter Kühlmittelleitermodule aufweist, die, wenn miteinander verbunden, zumindest teilweise den Kühlmittelleiter bilden, und wobei, zur Anpassung der Strömungslänge des Kühlmittels in der Kühlmittelversorgung, in dem Kühlmittelleiter eine Umlenkeinrichtung zur Umkehrung der Strömungsrichtung des Kühlmittels in dem Kühlmittelleiter vorgesehen ist und der Kühlmittelleiter zumindest in einem Längsabschnitt zwei Strömungskanäle aufweist, in welchen das Kühlmittel im Wesentlichen in entgegen gesetzten Richtungen führbar ist.

2. Modulares Batteriesystem nach Anspruch 1, **dadurch gekennzeichnet, dass** der Längsabschnitt des Kühlmittelleiters zumindest durch zwei Kühlmittelleitermodule des Kühlmittelleiters gebildet wird.

3. Modulares Batteriesystem nach Anspruch 1 oder 2, **dadurch gekennzeichnet, dass** die Kühlmittelleitermodule zumindest teilweise als Hohlstücke ausgebildet sind, und der Kühlmittelleiter zumindest teilweise als länglicher Hohlkörper ausgebildet ist, und die Umlenkeinrichtung so eingerichtet ist, dass sie den Kühlmittelstrom im Wesentlichen um 180° umlenkt.

4. Modulares Batteriesystem nach einem der Ansprüche 1 bis 3, **dadurch gekennzeichnet, dass** der Kühlmittelleiter in dem Längsabschnitt quer zur Längsrichtung zwei im Wesentlichen getrennte Hohlräume aufweist, welche zumindest teilweise die zwei Strömungskanäle bilden.

5. Modulares Batteriesystem nach Anspruch 4, **dadurch gekennzeichnet, dass** der Kühlmittelleiter in dem Längsabschnitt eine seitliche Öffnung zu zumindest einem der zwei Hohlräume aufweist.

6. Modulares Batteriesystem nach Anspruch 5, **dadurch gekennzeichnet, dass** einer der Kühlkörper einen Kühlkanal zur Durchströmung mit Kühlmittel aufweist, und die seitliche Öffnung des Kühlmittelleiters wirkend mit dem Kühlkanal verbunden ist.

7. Modulares Batteriesystem nach einem der vorhergehenden Ansprüche, **dadurch gekennzeichnet, dass** der Kühlmittelleiter in dem Längsabschnitt in einem Querschnitt ein erstes Profil sowie ein zumindest teilweise innerhalb des ersten Profils angeordnetes zweites Profil aufweist, wobei ein erster der zwei Strömungskanäle durch einen ersten Strömungsquerschnitt im Inneren des zweiten Profils und ein zweiter der zwei Strömungskanäle durch einen zweiten Strömungsquerschnitt zwischen dem ersten und dem zweiten Profil gebildet werden.

8. Modulares Batteriesystem nach Anspruch 7, **dadurch gekennzeichnet, dass** das zweite Profil zumindest teilweise die äußere Kontur des Kühlmittelleiters bildet.

9. Modulares Batteriesystem nach Anspruch 7 oder 8, **dadurch gekennzeichnet, dass** das erste und das zweite Profil einen im Wesentlichen rohrförmigen Querschnitt aufweisen.

10. Modulares Batteriesystem nach einem der Ansprüche 1 bis 9, **dadurch gekennzeichnet, dass** die Umlenkeinrichtung als Endstück des Kühlmittelleiters vorgesehen ist, wobei das Endstück an den Längsabschnitt des Kühlmittelleiters anschließt und diesen dicht verschließt.

11. Modulares Batteriesystem nach einem der Ansprüche 1 bis 10, **dadurch gekennzeichnet, dass** der Kühlmittelleiter als Kühlmittelverteiler zur Verteilung des Kühlmittels von einem Kühlmittelversorgungseinrichtung, insbesondere einem Kühlmittelreservoir oder einer Kühlmittelpumpe, zu dem Kühlkörper eingerichtet ist.

12. Modulares Batteriesystem nach einem der Ansprüche 1 bis 10, **dadurch gekennzeichnet, dass** der Kühlmittelleiter als Kühlmittelsammler zum Ableiten des Kühlmittels von dem Kühlkörper zu einer Kühlmittelversorgungseinrichtung, insbesondere einem Kühlmittelreservoir oder einer Kühlmittelpumpe, eingerichtet ist.

13. Modulares Batteriesystem nach einem der vorhergehenden Ansprüche, **dadurch gekennzeichnet, dass** die zumindest zwei Batteriemodule ein erstes und ein zweites hintereinander angeordnetes Batteriemodul aufweisen, wobei der Kühlmittelleiter als erster Kühlmittelleiter ausgeführt ist und ferner ein zweiter Kühlmittelleiter vorgesehen ist, und der erste Kühlmittelleiter auf einer ersten Seite des ersten und zweiten Batteriemoduls angeordnet und der zweite Kühlmittelleiter auf einer zweiten Seite des ersten und zweiten Batteriemoduls angeordnet ist.

14. Modulares Batteriesystem nach Anspruch 13, **dadurch gekennzeichnet, dass** auf der dem ersten und zweiten Batteriemodul abgewandten Seite des ersten Kühlmittelleiters zumindest ein weiteres Batteriemodul angeordnet ist.

15. Modulares Batteriesystem nach Anspruch 1, wobei die zumindest zwei Batteriemodule hintereinander angeordnet sind und jeder Kühlkörper einen Kühlkanal zur Durchströmung mit dem Kühlmittel aufweist, sowie eine Kühlmittelversorgungseinrichtung vorgesehen ist, so dass die Kühlmittelversorgung mit dem als Kühlmittelverteiler ausgeführten Kühlmittelleiter, zur Verteilung des Kühlmittels von der Kühlmittelversorgungseinrichtung, insbesondere einem Kühlmittelreservoir oder einer Kühlmittelpumpe, zu den Kühlkörpern und mit einem Kühlmittelsammler zum Ableiten des Kühlmittels von den Kühlkörpern zu der Kühlmittelversorgungseinrichtung, insbesondere dem Kühlmittelreservoir oder der Kühlmittelpumpe, eingerichtet ist, wobei der Kühlmittelverteiler durch, den Kühlkörpern zugeordnete, Kühlmittelverteilermodule und der Kühlmittelsammler durch, den Kühlkörpern zugeordnete Kühlmittelsammlermodule, aufgebaut ist und in dem Kühlmittelverteiler die Umlenkeinrichtung zur Umkehrung der Strömungsrichtung des Kühlmittels in dem Kühlmittelverteiler sowie in zumindest einem Längsabschnitt des Kühlmittelverteilers die beiden Strömungskanäle, in welchen das Kühlmittel im Wesentlichen in entgegengesetzten Richtungen transportierbar ist, vorgesehen sind, wobei der Kühlmittelverteiler auf einer ersten Seite der Kühlkörper angeordnet und der Kühlmittelsammler auf einer zweiten Seite der Kühlkörper angeordnet ist.

16. Batteriesystem nach Anspruch 15, **dadurch gekennzeichnet, dass** die Kühlmittelverteiler in dem Längsabschnitt quer zur Längsrichtung des Kühlmittelverteilers zumindest zwei im Wesentlichen voneinander getrennte Hohlräume und der Kühlmittelverteiler zumindest eine seitliche Öffnung zu einem der zwei Hohlräume aufweist, und die seitliche Öffnung des Kühlmittelleiters mit einem der Kühlkanäle eines der Kühlkörpers verbunden ist, und ferner die Umlenkeinrichtung so eingerichtet ist, dass sie den Kühlmittelstrom im Wesentlichen um 180° umlenkt.

17. Batteriesystem nach einem Ansprüche 15 oder 16, **dadurch gekennzeichnet, dass** der Kühlmittelverteiler in dem Längsabschnitt in einem Querschnitt ein erstes Profil sowie ein zumindest teilweise innerhalb des ersten Profils angeordnetes zweites Profil aufweist, wobei ein erster der zumindest zwei Strömungskanäle im Inneren des zweiten Profils und ein zweiter der zumindest zwei Strömungskanäle im Raum zwischen dem ersten und dem zweiten Profil gebildet werden, wobei das erste und das zweite Profil einen im Wesentlichen rohrförmigen Querschnitt aufweisen und der zweite Strömungskanal den ersten Strömungskanal zumindest teilweise umgibt.

18. Verfahren zur Kühlmittelversorgung eines Batteriesystems mit mehreren hintereinander angeordneten Batteriemodulen, wobei die Batteriemodule jeweils einen mit einem Kühlkanal ausgeführten Kühlkörper und eine mit dem Kühlkörper in wärmeleitendem Kontakt angeordnete Batteriezelle aufweisen, wobei der Kühlkanal von einem Kühlmittel durchströmt wird, und eine Kühlmittelversorgung mit einem Kühlmittelverteiler vorgesehen ist, wobei der Kühlmittelverteiler zur Verteilung des Kühlmittels von einer Kühlmittelversorgungseinrichtung, insbesondere von einem Kühlmittelreservoir oder einer Kühlmittelpumpe, an die Kühlkörper eingerichtet ist und ferner ein Kühlmittelsammler zum Ableiten des Kühlmittels von dem Kühlkörper zu der Kühlmittelversorgungseinrichtung, insbesondere zu dem Kühlmittelreservoir oder der Kühlmittelpumpe vorgesehen ist, wobei der Kühlmittelverteiler zumindest teilweise durch Kühlmittelverteilermodule und der Kühlmittelsammler zumindest teilweise durch Kühlmittelsammlermodule aufgebaut ist, und der Kühlmittelverteiler zur Anpassung der Strömungslänge des Kühlmittels durch die Kühlmittelversorgung zumindest in einem Längsabschnitt einen ersten und einen zweiten Strömungskanal sowie eine Umlenkungseinrichtung und eine Anzahl von seitlichen Öffnungen in dem zweiten Strömungskanal aufweist, und das Kühlmittel in einem ersten Schritt durch den ersten Strömungskanal geführt wird, in einem zweiten Schritt durch die Umlenkungseinrichtung im Wesentlichen um 180° umgelenkt wird und in einem dritten Schritt durch den zweiten Strömungskanal geführt wird, bevor das Kühlmittel über die seitlichen Öffnungen den Kühlkörpern zugeführt wird.

## Claims

1. Modular battery system comprising at least two battery modules, wherein each battery module has a heat sink, through at least part of which a coolant flows, and a battery cell, wherein the battery cell is arranged on the heat sink in such a way that thermally conductive contact is established between the battery cell and the heat sink, and a coolant supply with a coolant conductor for distributing the coolant to the heat sinks or for draining the coolant from the heat sinks is provided, wherein the coolant conductor has coolant conductor modules which, when connected to one another, at least partially form the coolant conductor, and wherein, in order to adjust the flow length of the coolant in the coolant supply, a deflection device for reversing the flow direction of the coolant in the coolant conductor is provided in the coolant conductor, and the coolant conductor has, at least in a longitudinal portion, two flow channels into which the coolant can be routed substantially in opposite directions.

2. Modular battery system according to Claim 1, **characterized in that** the longitudinal portion of the coolant conductor is formed at least by two coolant conductor modules of the coolant conductor.

3. Modular battery system according to Claim 1 or 2, **characterized in that** the coolant conductor modules are at least partially in the form of hollow pieces, and the coolant conductor is at least partially in the form of an elongate hollow body, and the deflection device is designed such that it deflects the coolant flow substantially through 180°.

4. Modular battery system according to one of Claims 1 to 3, **characterized in that** the coolant conductor has, in the longitudinal portion, transverse to the longitudinal direction, two substantially separated hollow spaces which at least partially form the two flow channels.

5. Modular battery system according to Claim 4, **characterized in that** the coolant conductor has, in the longitudinal portion, a lateral opening to at least one of the two hollow spaces.

6. Modular battery system according to Claim 5, **characterized in that** one of the heat sinks has a cooling channel for coolant to flow through, and the lateral opening in the coolant conductor is operatively connected to the cooling channel.

7. Modular battery system according to one of the preceding claims, **characterized in that** the coolant conductor has, in the longitudinal portion, in cross section, a first profile and also a second profile which is arranged at least partially within the first profile, wherein a first of the two flow channels is formed by a first flow cross section in the interior of the second profile, and a second of the two flow channels is formed by a second flow cross section between the first and the second profile.

8. Modular battery system according to Claim 7, **characterized in that** the second profile at least partially forms the outer contour of the coolant conductor.

9. Modular battery system according to Claim 7 or 8, **characterized in that** the first and the second profile have a substantially tubular cross section.

10. Modular battery system according to one of Claims 1 to 9, **characterized in that** the deflection device is provided as an end piece of the coolant conductor, wherein the end piece adjoins the longitudinal portion of the coolant conductor and closes the said longitudinal portion in a sealed manner.

11. Modular battery system according to one of Claims 1 to 10, **characterized in that** the coolant conductor is designed as a coolant distributor for distributing the coolant from a coolant supply device, in particular a coolant reservoir or a coolant pump, to the heat sink.

12. Modular battery system according to one of Claims 1 to 10, **characterized in that** the coolant conductor is designed as a coolant collector for draining the coolant from the heat sink to a coolant supply device, in particular a coolant reservoir or a coolant pump.

13. Modular battery system according to one of the preceding claims, **characterized in that** the at least two battery modules have a first and a second battery module which are arranged one behind the other, wherein the coolant conductor is configured as a first coolant conductor and, furthermore, a second coolant conductor is provided, and the first coolant conductor is arranged on a first side of the first and second battery module, and the second coolant conductor is arranged on a second side of the first and second battery module.

14. Modular battery system according to Claim 13, **characterized in that** at least one further battery module is arranged on that side of the first coolant conductor which is averted from the first and second battery module.

15. Modular battery system according to Claim 1, wherein the at least two battery modules are arranged one behind the other and each heat sink has a cooling channel for the coolant to flow through, and also a coolant supply device is provided, so that the coolant supply is designed to distribute the coolant from the coolant supply device, in particular a coolant reservoir or a coolant pump, to the heat sinks by way of the coolant conductor, which is configured as a coolant distributor, and to drain the coolant from the heat sinks to the coolant supply device, in particular the coolant reservoir or the coolant pump, by way of a coolant collector, wherein the coolant distributor is constructed by coolant distributor modules which are associated with the heat sinks, and the coolant collector is constructed by coolant collector modules which are associated with the heat sinks, and the deflection device for reversing the flow direction of the coolant in the coolant distributor is provided in the coolant distributor, and also the two flow channels, in which the coolant can be transported substantially in opposite directions, are provided in at least one longitudinal portion of the coolant distributor, wherein the coolant distributor is arranged on a first side of the heat sinks, and the coolant collector is arranged on a second side of the heat sinks.

16. Battery system according to Claim 15, **characterized in that** the coolant distributor has, in the longitudinal portion, transverse to the longitudinal direction of the coolant distributor, at least two hollow spaces which are substantially separated from one another, and the coolant distributor has at least one lateral opening to one of the two hollow spaces, and the lateral opening in the coolant conductor is connected to one of the cooling channels of one of the heat sinks, and furthermore the deflection device is designed such that it deflects the coolant flow substantially through 180°.

17. Battery system according to either of Claims 15 and 16, **characterized in that** the coolant distributor has, in the longitudinal portion, in a cross section, a first profile and also a second profile which is arranged at least partially within the first profile, wherein a first of the at least two flow channels is formed in the interior of the second profile, and a second of the at least two flow channels is formed in the space between the first and the second profile, wherein the first and the second profile have a substantially tubular cross section, and the second flow channel at least partially surrounds the first flow channel.

18. Method for supplying coolant to a battery system comprising a plurality of battery modules which are arranged one behind the other, wherein the battery modules each have a heat sink, which is configured with a cooling channel, and a battery cell, which is arranged in thermally conductive contact with the heat sink, wherein a coolant flows through the cooling channel, and a coolant supply with a coolant distributor is provided, wherein the coolant distributor is designed to distribute the coolant from a coolant supply device, in particular from a coolant reservoir or a coolant pump, to the heat sinks, and furthermore a coolant collector for draining the coolant from the heat sink to the coolant supply device, in particular to the coolant reservoir or to the coolant pump, is provided, wherein the coolant distributor is constructed at least partially by coolant distributor modules, and the coolant collector is constructed at least partially by coolant collector modules, and the coolant distributor has, for adjusting the flow length of the coolant through the coolant supply, at least in a longitudinal portion, a first and a second flow channel and also a deflection device and a number of lateral openings in the second flow channel, and the coolant is routed through the first flow channel in a first step, is deflected by the deflection device substantially through 180° in a second step, and is routed through the second flow channel in a third step, before the coolant is supplied to the heat sinks via the lateral openings.

## Revendications

1. Système de batterie modulaire doté d'au moins deux modules de batterie, chaque module de batterie comportant un corps de refroidissement traversé au moins en partie par un moyen de refroidissement ainsi qu'une cellule de batterie, la cellule de batterie étant disposée de telle sorte au niveau du corps de refroidissement qu'un contact thermoconducteur est mis en place entre la cellule de batterie et le corps de refroidissement et qu'une alimentation en moyen de refroidissement dotée d'un conducteur de moyen de refroidissement est prévue pour la répartition du moyen de refroidissement au niveau du corps de refroidissement ou l'évacuation du moyen de refroidissement hors du corps de refroidissement, le conducteur de moyen de refroidissement comportant des modules de conducteur de moyen de refroidissement qui, lorsqu'ils sont reliés entre eux, forment au moins en partie le conducteur de moyen de refroidissement et un dispositif de déviation étant prévu dans le conducteur de moyen de refroidissement pour inverser la direction d'écoulement du moyen de refroidissement dans le conducteur de moyen de refroidissement, en vue d'adapter la longueur d'écoulement du moyen de refroidissement dans l'alimentation en moyen de refroidissement, et le conducteur de moyen de refroidissement comportant au moins deux canaux d'écoulement dans une section longitudinale, le moyen de refroidissement étant pour l'essentiel guidé dans des directions opposées dans lesdits canaux.

2. Système de batterie modulaire selon la revendication 1, **caractérisé en ce que** la section longitudinale du conducteur de moyen de refroidissement est formée par au moins deux modules de conducteur de moyen de refroidissement du conducteur de moyen de refroidissement.

3. Système de batterie modulaire selon la revendication 1 ou 2, **caractérisé en ce que** les modules de conducteur de moyen de refroidissement prennent au moins en partie la forme de pièces creuses et que le conducteur de moyen de refroidissement prend au moins en partie une forme de corps creux oblong et que le dispositif de déviation est conçu de telle sorte qu'il dévie pour l'essentiel de 180° l'écoulement de moyen de refroidissement.

4. Système de batterie modulaire selon l'une quelconque des revendications 1 à 3, **caractérisé en ce que** le conducteur de moyen de refroidissement comporte dans la section longitudinale, transversalement à la direction longitudinale, deux chambres creuses pour l'essentiel séparées formant au moins en partie les deux canaux d'écoulement.

5. Système de batterie modulaire selon la revendication 4, **caractérisé en ce que** le conducteur de moyen de refroidissement comporte dans la section longitudinale une ouverture latérale donnant sur au moins une des deux chambres creuses.

6. Système de batterie modulaire selon la revendication 5, **caractérisé en ce qu'**un des corps de refroidissement comporte un canal de refroidissement pour l'écoulement de moyen de refroidissement et que l'ouverture latérale du conducteur de moyen de refroidissement est reliée de façon active au canal de refroidissement.

7. Système de batterie modulaire selon l'une quelconque des revendications précédentes, **caractérisé en ce que** le conducteur de moyen de refroidissement comporte dans la section longitudinale, dans une section transversale, un premier profil ainsi qu'un deuxième profil au moins en partie disposé à l'intérieur du premier profil, un premier canal parmi les deux canaux d'écoulement étant formé par une première section transversale d'écoulement à l'intérieur du deuxième profil et un deuxième canal parmi les deux canaux d'écoulement étant formé par une deuxième section transversale d'écoulement entre le premier et le deuxième profil.

8. Système de batterie modulaire selon la revendication 7, **caractérisé en ce que** le deuxième profil forme au moins en partie le contour extérieur du conducteur de moyen de refroidissement.

9. Système de batterie modulaire selon la revendication 7 ou 8, **caractérisé en ce que** le premier et le deuxième profil comportent pour l'essentiel une section transversale en forme de tube.

10. Système de batterie modulaire selon l'une quelconque des revendications 1 à 9, **caractérisé en ce que** le dispositif de déviation est prévu sous la forme d'une pièce d'extrémité du conducteur de moyen de refroidissement, la pièce d'extrémité étant raccordée au niveau de la section longitudinale du conducteur de moyen de refroidissement et la fermant de façon étanche.

11. Système de batterie modulaire selon l'une quelconque des revendications 1 à 10, **caractérisé en ce que** le conducteur de moyen de refroidissement prend la forme d'un répartiteur de moyen de refroidissement servant à la répartition du moyen de refroidissement à partir d'un dispositif d'alimentation en moyen de refroidissement, notamment d'un réservoir de moyen de refroidissement ou d'une pompe de moyen de refroidissement, jusqu'au corps de refroidissement.

12. Système de batterie modulaire selon l'une quelconque des revendications 1 à 10, **caractérisé en ce que** le conducteur de moyen de refroidissement prend la forme d'un collecteur de moyen de refroidissement permettant de dévier le moyen de refroidissement d'un corps de refroidissement vers un dispositif d'alimentation en moyen de refroidissement, notamment un réservoir de moyen de refroidissement ou une pompe de moyen de refroidissement.

13. Système de batterie modulaire selon l'une quelconque des revendications précédentes, **caractérisé en ce que** les au moins deux modules de batterie comportent un premier et un deuxième module de batterie disposés l'un derrière l'autre, le conducteur de moyen de refroidissement prenant la forme d'un premier conducteur de moyen de refroidissement et un deuxième conducteur de moyen de refroidissement étant en outre prévu et le premier conducteur de moyen de refroidissement étant disposé sur un premier côté du premier et du deuxième module de batterie et le deuxième conducteur de moyen de refroidissement étant disposé sur un deuxième côté du premier et du deuxième module de batterie.

14. Système de batterie modulaire selon la revendication 13, **caractérisé en ce qu'**au moins un module de batterie supplémentaire est disposé sur le côté du premier conducteur de moyen de refroidissement opposé au premier et deuxième module de batterie.

15. Système de batterie modulaire selon la revendication 1, les au moins deux modules de batterie étant disposés l'un derrière l'autre et chaque corps de refroidissement comportant un canal de refroidissement servant à l'écoulement de moyen de refroidissement et un dispositif d'alimentation en moyen de refroidissement étant prévu, de sorte que l'alimentation en moyen de refroidissement est équipée du conducteur de moyen de refroidissement réalisé sous la forme d'un répartiteur de moyen de refroidissement pour répartir le moyen de refroidissement du dispositif d'alimentation en moyen de refroidissement, notamment d'un réservoir de moyen de refroidissement ou d'une pompe de moyen de refroidissement, jusqu'aux corps de refroidissement et d'un collecteur de moyen de refroidissement pour dévier le moyen de refroidissement des corps de refroidissement jusqu'au dispositif d'alimentation en moyen de refroidissement, notamment au réservoir de moyen de refroidissement ou à la pompe de moyen de refroidissement, le répartiteur de moyen de refroidissement étant réalisé de façon modulaire au moyen des modules de répartiteur de moyen de refroidissement associés aux corps de refroidissement et le collecteur de moyen de refroidissement étant réalisé de façon modulaire au moyen des modules de collecteur de moyen de refroidissement associés aux corps de refroidissement et le dispositif de déviation étant prévu dans le répartiteur de moyen de refroidissement pour inverser la direction d'écoulement du moyen de refroidissement dans le répartiteur de moyen de refroidissement et les deux canaux d'écoulement dans lesquels le moyen de refroidissement peut être transporté pour l'essentiel dans la direction opposée étant prévus au moins dans une section longitudinale du répartiteur de moyen de refroidissement, le répartiteur de moyen de refroidissement étant disposé sur un premier côté des corps de refroidissement et le collecteur de moyen de refroidissement étant disposé sur un deuxième côté des corps de refroidissement.

16. Système de batterie selon la revendication 15, **caractérisé en ce que** le répartiteur de moyen de refroidissement comporte dans la section longitudinale, transversalement à la direction longitudinale du répartiteur de moyen de refroidissement, au moins deux chambres creuses séparées pour l'essentiel l'une de l'autre et que le répartiteur de moyen de refroidissement comporte au moins une ouverture latérale donnant sur une des deux chambres creuses et l'ouverture latérale du conducteur de moyen de refroidissement étant reliée à un des canaux de refroidissement d'un des corps de refroidissement et le dispositif de déviation étant en outre conçu pour dévier pour l'essentiel de 180° l'écoulement de moyen de refroidissement.

17. Système de batterie selon l'une quelconque des revendications 15 ou 16, **caractérisé en ce que** le répartiteur de moyen de refroidissement comporte dans la section longitudinale, dans une section transversale, un premier profil ainsi qu'un deuxième profil disposé au moins en partie à l'intérieur du premier profil, un premier canal parmi les au moins deux canaux d'écoulement étant formé à l'intérieur du deuxième profil et un deuxième canal parmi les au moins deux canaux d'écoulement étant formé dans la chambre prévue entre le premier et le deuxième profil, le premier et le deuxième profil comportant une section transversale pour l'essentiel en forme de tube et le deuxième canal d'écoulement entourant au moins en partie le premier canal d'écoulement.

18. Procédé d'alimentation en moyen de refroidissement d'un système de batterie avec plusieurs modules de batterie disposés les uns derrière les autres, les modules de batterie comportant respectivement un corps de refroidissement réalisé avec un canal de refroidissement et une cellule de batterie disposée en contact thermoconducteur avec le corps de refroidissement, le canal de refroidissement étant traversé par un moyen de refroidissement et une alimentation en moyen de refroidissement étant prévue avec un répartiteur de moyen de refroidissement, le répartiteur de moyen de refroidissement étant conçu au niveau du corps de refroidissement pour la répartition du moyen de refroidissement en partant d'un dispositif d'alimentation en moyen de refroidissement, notamment d'un réservoir de moyen de refroidissement ou d'une pompe de moyen de refroidissement et un collecteur de moyen de refroidissement étant en outre prévu pour dévier le moyen de refroidissement du corps de refroidissement au dispositif d'alimentation en moyen de refroidissement, notamment au réservoir de moyen de refroidissement ou à la pompe de moyen de refroidissement, le répartiteur de moyen de refroidissement étant réalisé au moins en partie de façon modulaire par le biais de modules de répartiteur de moyen de refroidissement et le collecteur de moyen de refroidissement étant réalisé au moins au moins en partie de façon modulaire par le biais de modules de collecteur de moyen de refroidissement et le répartiteur de moyen de refroidissement comportant un premier et un deuxième canal d'écoulement ainsi qu'un dispositif de déviation et un certain nombre d'ouvertures latérales prévues dans le deuxième canal d'écoulement pour l'adaptation de la longueur d'écoulement du moyen de refroidissement en alimentant en moyen de refroidissement au moins une section longitudinale et le moyen de refroidissement étant guidé à travers le premier canal d'écoulement au cours d'une première étape, dévié pour l'essentiel de 180° à travers le dispositif de déviation au cours d'une deuxième étape et guidé à travers le deuxième canal d'écoulement au cours d'une troisième étape, avant que le moyen de refroidissement soit amené au corps de refroidissement via les ouvertures latérales.
